# EUROPÄISCHE PATENTSCHRIFT

(11) **EP 2 652 172 B1**
(45) Veröffentlichungstag und Bekanntmachung des Hinweises auf die Patenterteilung: **17.08.2016**
(21) Anmeldenummer: 11758213.0
(22) Anmeldetag: 21.09.2011
(51) Int. Cl.: C23C 22/74, H01F 1/147, C21D 8/12, C04B 28/34, H01F 27/245

(54) **VERFAHREN ZUR HERSTELLUNG EINES KORNORIENTIERTEN ELEKTROBANDS**
METHOD FOR PRODUCING A GRAIN-ORIENTED ELECTRIC STRIP
PROCÉDÉ DE FABRICATION D'UNE BANDE ÉLECTRIQUE À GRAINS ORIENTÉS

(30) Priorität: 14.12.2010 DE 102010054509
(43) Veröffentlichungstag der Anmeldung: 23.10.2013
(73) Patentinhaber: ThyssenKrupp Electrical Steel GmbH, 45881 Gelsenkirchen (DE)
(72) Erfinder: HOLZAPFEL, Christof, 45897 Gelsenkirchen (DE); PAHLKE, Stefan, 45894 Gelsenkirchen (DE); SCHEPERS, Carsten, 46348 Raesfeld (DE); SCHRAPERS, Heiner, 47226 Duisburg (DE)
(74) Vertreter: Cohausz & Florack
(86) Internationale Anmeldenummer: PCT/EP2011/066423
(87) Internationale Veröffentlichungsnummer: WO 2012/079790

(56) Entgegenhaltungen:
- EP-A1- 0 995 816
- EP-A2- 0 201 228
- WO-A2-2009/101129
- US-A- 3 562 011

## Beschreibung

Die Erfindung betrifft ein Verfahren zur Herstellung eines kornorientierten Elektrobands, das mit einer Phosphatschicht belegt ist. Die Erfindung betrifft ferner ein mit einer Phosphatschicht belegtes kornorientiertes Elektroband, das mit dem erfindungsgemäßen Verfahren hergestellt werden kann, sowie die Verwendung dieses Elektrobands als Kernwerkstoff in einem Transformator.

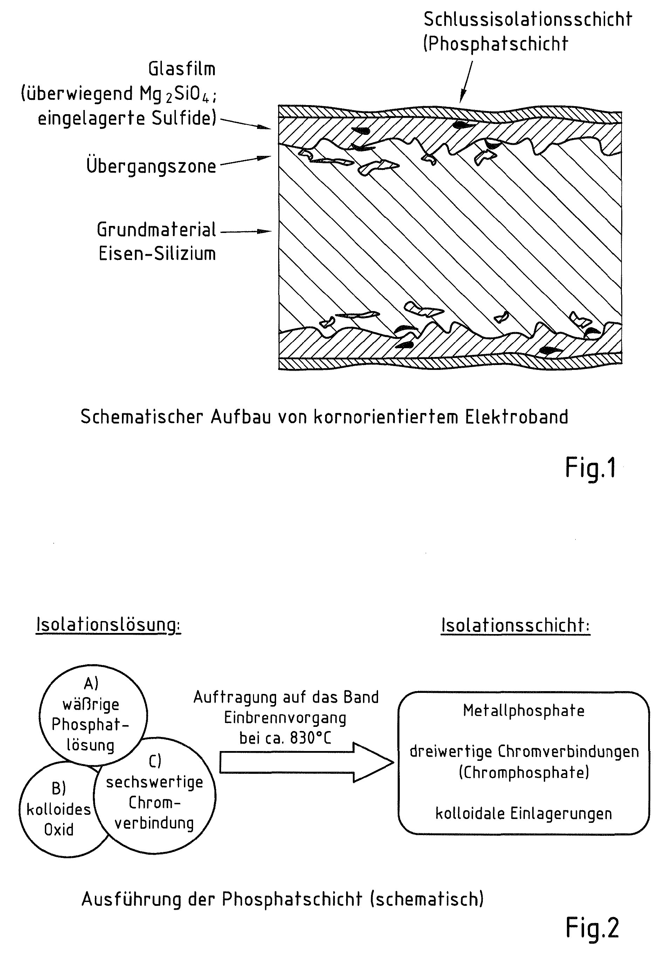

Kornorientiertes Elektroband (im Weiteren kurz ko-Elektroband) ist schematisch betrachtet ein ferromagnetischer Eisenwerkstoff in Bandform mit Dicken von ca. 0,15 mm bis 0,50 mm, an dessen Oberfläche sich ein elektrisch isolierendes Schichtsystem befindet. Der prinzipielle Aufbau von ko-Elektroband ist in Figur 1 verdeutlicht.

Hinsichtlich der Anwendung von ko-Elektroband im Transformator werden hohe Anforderungen an die magnetischen Eigenschaften des Werkstoffes gestellt. Diese lassen sich nur erreichen, wenn die kristallografische Ausrichtung des Eisenwerkstoffes eine bestimmte Textur aufweist, bei der die Richtung der leichtesten Magnetisierbarkeit in Walzrichtung bzw. im Hinblick auf die spätere Anwendung in Magnetfeldrichtung liegt. Erreicht wird die Ausbildung der Textur durch gezielte Kaltverformung mit anschließenden Wärmebehandlungen, bei denen verschiedene Rekristallisationsprozesse ablaufen. Neben der Textur, also der Kristallausrichtung, hat auch die für ferromagnetische Werkstoffe typische Domänenstruktur einen Einfluss auf die magnetischen Eigenschaften. Die Domänenstruktur, die dynamisch an den späteren Ummagnetisierungsprozessen beteiligt ist, kann über physikalische Einflüsse so modifiziert werden, dass die Ummagnetisierungsvorgänge mit geringeren Energieverlusten verbunden sind. Eine wesentliche physikalische Einflussgröße in diesem Zusammenhang ist die von dem Schichtsystem auf den ferromagnetischen Grundwerkstoff übertragene Zugspannung. Je höher diese Zugspannung ist, desto niedriger wird der Ummagnetisierungsverlust des Werkstoffes. Aus dieser Sicht kommen dem an der Oberfläche befindlichen Schichtsystem mehrere Funktionen zu:
a) elektrische Isolierung des metallischen Grundwerkstoffs
b) Übertragung einer Zugspannung auf den metallischen Grundwerkstoff
c) Gewährleistung einer chemischen und thermischen Beständigkeit

Um diese Aufgaben zu erfüllen, hat sich in der Praxis ein "Zweilagensystem" als Schichtsystem durchgesetzt, welches aus dem sogenannten Glasfilm, einer keramikähnlichen Schicht, und der sogenannten Phosphatschicht besteht. Beide üben neben ihren übrigen Eigenschaften eine permanente Zugspannung auf den Grundwerkstoff aus. Im Fokus der vorliegenden Erfindung steht die äußere Phosphatschicht, die wesentlichen Beitrag zur chemischen und thermischen Beständigkeit leistet, aber auch eine permanente Zugspannung auf den darunter liegenden Werkstoff ausüben.

Aus einer Vielzahl vorgeschlagener Methoden und Verfahren hat sich für die Phosphatschicht ein System in der Praxis durchgesetzt, welches dem in Figur 2 schematisch dargestellten entspricht.

Eine wässrige Phosphatlösung, bestehend im Wesentlichen aus
a) einem oder mehreren in Wasser gelösten primären Phosphate
b) einer oder mehreren kolloidalen Oxidverbindungen, insbesondere Kieselsol
c) einer Chrom(VI)-Verbindung, insbesondere Chromtrioxid oder Chromsäure
wird in definierter Menge auf das Band aufgetragen. Die Auftragung erfolgt in der Praxis durch überschüssiges Auftragen der Lösung auf das Band mit anschließendem Abquetschen der überschüssigen Lösung. Die Lösung selbst befindet sich im Allgemeinen in einem Kreislauf, so dass permanenter Kontakt zwischen Isolationslösung und Bandoberfläche besteht. Das so beschichtete Band durchläuft einen Durchlaufofen mit einer Temperatur von etwa 850°C. Die erzielte Phosphatschicht erfüllt im Wesentlichen sämtliche für die Praxis relevante Anforderungen, insbesondere
a) gute elektrisch isolierende Eigenschaften
b)eine hohe chemische Beständigkeit
c) Korrosionsbeständigkeit
d) hohe Zugspannungsübertragung
e) in der Praxis gute Beschichtbarkeit

Die Bedeutung der Zusammensetzung der Phosphatlösung im Hinblick auf die Schichteigenschaften a) bis e) sind beispielweise in US 02753282, EP 0406833, DE 1954216, DE 2247269, EP 0201228 erläutert.

Die auf den Grundwerkstoff übertragene Zugspannung wird überwiegend durch die Verwendung einer kolloidalen Oxidverbindung mit einem Phosphatbinder erzeugt.

Die Zugabe von hexavalentem Chrom(VI) soll:
a) die Korrosionsbeständigkeit des Fertigmaterials verbessern
b) im Lösungszustand das in Lösung gehen von Eisen verhindern
c) über verschiedenste Mechanismen eine gewisse Klebrigkeit der Fertigisolation verhindern
d)die chemische Beständigkeit der Schicht, insbesondere gegen Wassereinwirkung, erhöhen
e)beim Einbrennen der Phosphatlösung freiwerdende Phosphorsäure zu Chromphosphat binden

Wesentlicher Nachteil bei dieser Verfahrensweise ist, dass Chrom(VI) toxisch, karzinogen und stark wassergefährdend ist. Bei Anwendungen von Chrom(VI) oder Chrom(VI)-haltigen Zubereitungen sind erhebliche Arbeitssicherheit- und Umweltschutzmaßnahmen erforderlich. Grundsätzlich steht die Anwendung von Chrom(VI) in industriellen Fertigungen immer wieder zur Diskussion.

Versuche, das Chrom(VI) einfach aus der Phosphatlösung wegzulassen, sind bisher gescheitert. Durch das ersatzlose Weglassen von Chrom(VI) aus der Phosphatlösung erhält die Isolationslösung derart andere chemische Eigenschaften, dass eine Anwendung in der Praxis nicht in Betracht kommt. Beispielsweise ist der chemische Angriff auf den Eisengrundwerkstoff mit Chrom(VI) inhibiert. Das Weglassen von Chrom(VI) führt zu einer deutlichen chemischen Reaktion zwischen der Phosphatlösung und dem Metall, einer Beizreaktion. In folgendem Experiment wurden untenstehende Phosphatlösungen angesetzt.

**Tabelle 1**

| Lösungskomponente | | **ohne Chrom (VI)** | **mit Chrom (VI)** |
|---|---|---|---|
| Monoaluminiumphosphatlösung 50% | g | 90 | 90 |
| Kieselsol 30% | g | 110 | 110 |
| Chromtrioxid | g | | 7 |

Durch Eintauchen einer ko-Elektrobandprobe ohne Glasfilm kann der chemische Angriff der Lösung auf den Grundwerkstoff gut in Form des Beizverlustes dargestellt werden. Dabei wird die Probe vor dem Eintauchen und nach verschiedenen Einwirkzeiten gewogen und der Beizabtrag ermittelt.

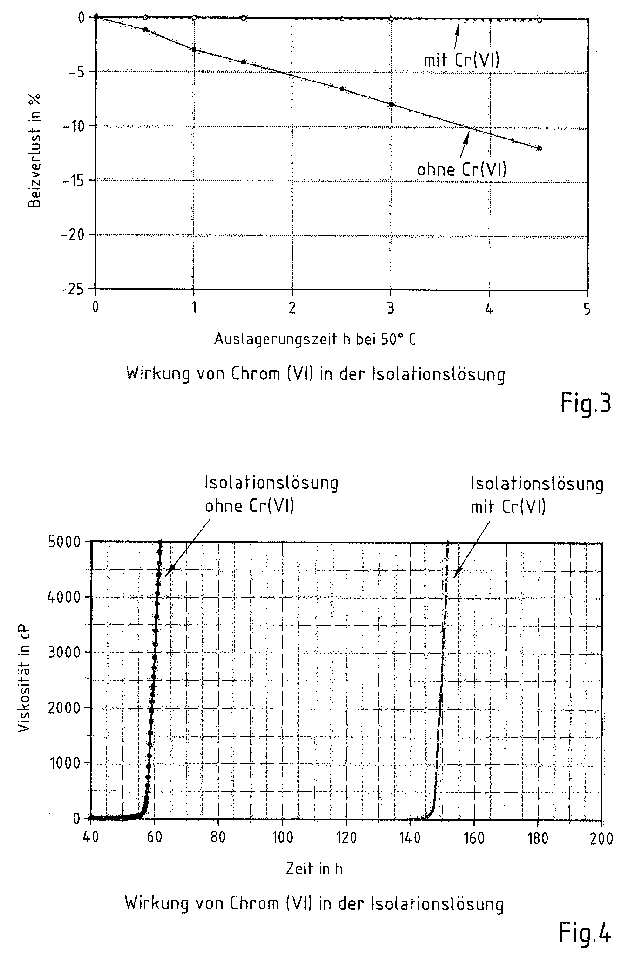

Figur 3 zeigt deutlich, dass Chrom(VI) die chemische Reaktion mit dem metallischen Grundwerkstoff inhibiert. Daraus folgt, dass die Isolationslösung im Laufe ihrer Anwendung wesentlich geringer mit Eisenphosphaten kontaminiert wird, die in der eingebrannten Schicht schädliche Auswirkungen haben. Diese Eigenschaft ist bekannt.

Eine weitere und insbesondere für die Praxis wichtige Lösungseigenschaft ist die sogenannte Lösungsstabilität. Durch das Vorhandensein einer kolloidalen Komponente (Kieselsol) erhält die Lösung thixotrope Eigenschaften. Es findet eine von der Zeit, der Temperatur und von Kontaminationen abhängige reversible Vergelung der Lösung statt. Dieser Prozess steht in Zusammenhang mit den Eigenschaften der eingebrannten Schicht, darf allerdings während der Lösungsanwendung in einer konventionellen Beschichtungsvorrichtung nicht auftreten. Die Stabilität der Lösung kann durch eine experimentelle Bestimmung des zeitlichen Verlaufes der Viskosität dargestellt werden. Die Vergelung führt zu einem nahezu sprunghaften Anstieg der Viskosität. In Figur 4 sind die Ergebnisse von Viskositätsmessungen der Lösungen aus obigem Beispiel dargestellt.

Es ist deutlich zu erkennen, dass Chrom(VI) den Zeitpunkt der einsetzenden Vergelung hinauszögert. Diese Eigenschaft des hexavalenten Chrom(VI) wird in oben aufgeführten Druckschriften nicht erwähnt, ist bei der Gesamtbetrachtung aber von entscheidender Bedeutung.

In WO 2009/101129 wird ein Verfahren bereitgestellt, durch welches kolloidale Phosphatlösungen in der Praxis erfolgreich ohne Chrom(VI) eingesetzt werden können. Das Verfahren basiert im Wesentlichen auf dem Einsatz von sogenannten Beizinhibitoren und Kolloidstabilisatoren, die die entsprechenden Funktionen des Chrom(VI) übernehmen.

Beispielsweise führen folgende Isolationslösungen zu unten dargestellten Lösungseigenschaften.

**Tabelle 2**

| Lösungskomponente | | **ohne Beizinhibitor** | **mit Beizinhibitor** |
|---|---|---|---|
| Monoaluminiumphosphatlösung 50% | g | 90 | 90 |
| Kieselsol 30% | g | 110 | 110 |
| Diethylthioharnstoff | g | | 0,06 |

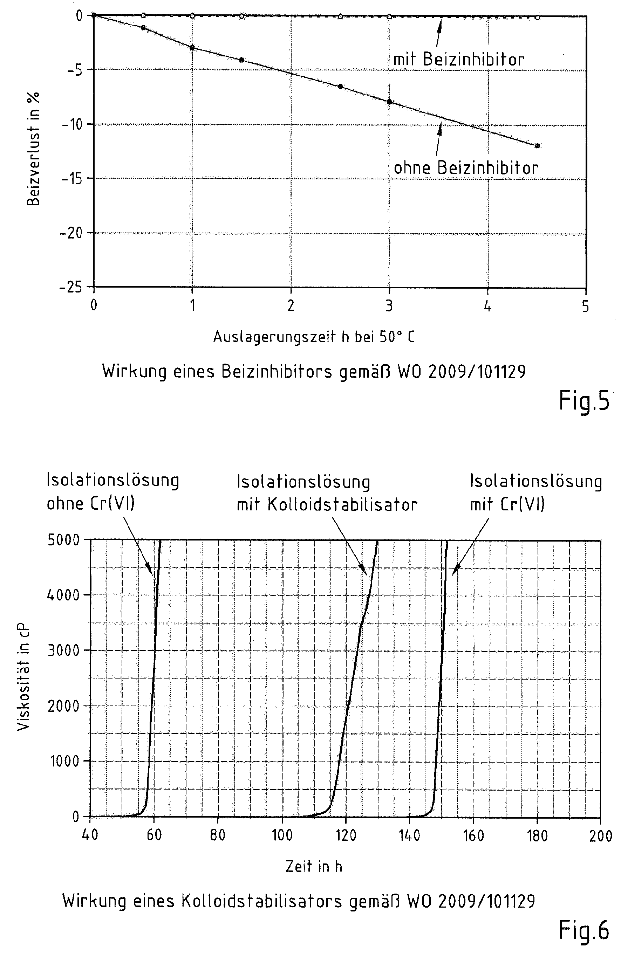

Die Wirkung des Beizinhibitors in einem Verfahren gemäß WO 2009/101129 ist in Figur 5 demonstriert.

Hinsichtlich der Kolloidstabilität werden in WO 2009/101129 sogenannte Kolloidstabilisatoren genannt, insbesondere Ethylphosphate, deren Wirkung in Figur 6 demonstriert werden.

Insgesamt ist durch WO 2009/101129 ein Verfahren gegeben, durch welches kolloidale Phosphatisolationslösungen auf ko-Elektroband angewendet werden können, die kein Chrom enthalten, also chromfrei sind.

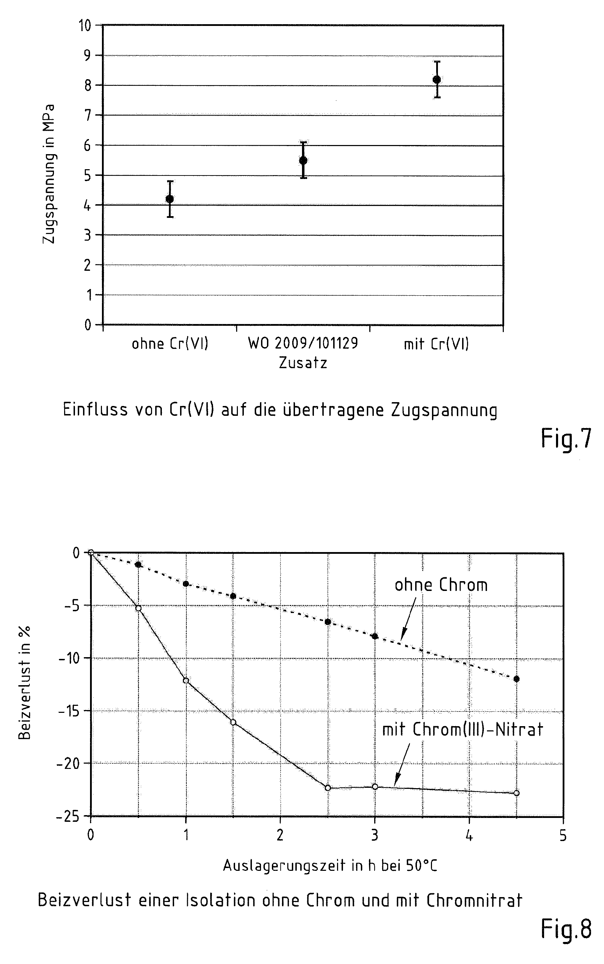

WO 2009/101129 liefert somit ein chromfreies Verfahren, welches in der Praxis sehr gut anwendbar ist und die technologischen Anforderungen der ko-Elektrobandisolation bereits zufrieden stellend erfüllt. Verglichen mit Chrom(VI)-haltigen Isolationsschichten weisen die gemäß WO 2009/101129 gefertigten Isolationsschichten jedoch leicht verschlechterte optische Eigenschaften und eine leicht niedrigere Zugspannung auf (vgl. Figur 7).

Die der Erfindung zugrunde liegende Aufgabe besteht darin, eine Chrom(VI)-freie Phosphatlösung zur Herstellung eines mit einer Phosphatschicht belegten kornorientierten Elektrobands bereitzustellen, wobei die Phosphatschicht in ihren Eigenschaften einer Chrom(VI)-haltigen Isolation möglichst gleichkommen soll. Insbesondere soll die Phosphatschicht verglichen mit einer gemäß WO 2009/101129 aufgebrachten Phosphatschicht verbesserte optische Eigenschaften und eine höhere Zugspannung aufweisen.

Diese Aufgabe wird gelöst durch ein Verfahren zur Herstellung eines mit einer Phosphatschicht belegten kornorientierten Elektrobands, in dem auf das Elektroband eine Phosphatlösung aufgebracht wird, die eine kolloide Komponente, sowie mindestens einen Kolloidstabilisator (A), und/oder mindestens einen Beizinhibitor (B), enthält, wobei die Phosphatlösung zusätzlich mindestens eine Verbindung, die Chrom in der Oxidationsstufe III aufweist (Chrom(III)-Verbindung), enthält.

Mit dem Ausdruck, "die Phosphatlösung enthält eine kolloide Komponente", wird erfindungsgemäß verstanden, dass ein Anteil der Phosphatlösung aus festen Teilchen oder supramolekularen Aggregaten mit Größen von einigen Nanometern bis einigen Mikrometern besteht. Vorzugsweise bewegt sich die Größe der kolloiden Komponente in der Phosphatlösung im Bereich von 5 nm bis 1 µm, vorzugsweise im Bereich von 5 nm bis 100 nm, und insbesondere im Bereich von 10 nm bis 100 nm.

Der Anteil der kolloiden Komponente in der Phosphatlösung kann variieren. Vorzugsweise bewegt sich der Anteil der kolloiden Komponente in der Phosphatlösung im Bereich von 5 Gew.% und 50 Gew.%, insbesondere von 5 Gew.% und 30 Gew.%. Als kolloide Komponente können die verschiedensten Substanzen eingesetzt werden. Zweckmäßigerweise sollten diese Substanzen nicht phosphorsäurelöslich sein.

Gute Ergebnisse werden vor allem mit Oxiden, vorzugsweise mit Cr₂O₃, ZrO, SnO₂, V₂O₃, Al₂O₃, SiO₂, vorzugsweise als wässrige Suspensionen, erzielt. Hervorragend eignet sich insbesondere SiO₂. Eine erfindungsgemäß besonders geeignete kolloide Komponente ist somit Kieselsol. Ausgezeichnete Ergebnisse werden mit Kieselsol erzielt, das einen Anteil an SiO₂ in Wasser von 10 bis 50 Gew.%, vorzugsweise von 20 bis 40 Gew.%, aufweist. Für SiO₂ besonders zweckmäßige Partikelgrößen sind 5 bis 30 nm, vorzugsweise 10 bis 20 nm.

Im Rahmen der Arbeiten zur Entwicklung einer Chrom(VI)-freien Isolation zeigte sich überraschenderweise, dass Chrom(III)-Verbindungen - die erheblich weniger toxisch sind als Chrom(VI)-Verbindungen - spezielle Funktionen der Chrom(VI)-Verbindungen übernehmen können. Dies ist insofern überraschend, da der Austausch von Chrom(VI) durch das erheblich weniger toxische Chrom(III) sich in der Praxis nicht durchgesetzt hat, da elementare Eigenschaften der Lösung bzw. der eingebrannten Isolationsschicht nicht den Anforderungen entsprechen oder die Anwendung in betrieblichen Beschichtungssystemen unmöglich macht.

So führt der Austausch von Chrom(VI)-Säure durch Chrom(III)-Nitrat zu untenstehenden Ergebnissen.

**Tabelle 3**

| Lösungskomponente | | **ohne Chrom** | **mit Chrom(III)** |
|---|---|---|---|
| Monoaluminiumphosphatlösung 50% | g | 90 | 90 |
| Kieselsol 30% | g | 110 | 110 |
| Chrom(III)-Nitrat | g | | 24 |

Es wird vermutet, dass der Austausch von Chrom(V1) durch Chrom(III) bisher deshalb nicht gelungen ist, weil die Wechselwirkung der Phosphatlösung mit Chrom(III) deutlich anders ist als mit Chrom(VI). Die Wechselwirkung führt zu sehr schneller und störenden Kontaminationen der Phosphatlösung mit Eisen und darüber hinaus zu deutlich geringerer Lösungsstabilität mit sehr frühen Vergelungsprozessen. Die stark unterschiedliche Wechselwirkung zwischen Phosphatierlösung und zu beschichtendem Band kann bei Anwesenheit von Chrom(III) wahrscheinlich auf Bindungspartner der meist eingesetzten Chrom(III)-Salze zurückgeführt werden. So wird die Lösung im Falle des Chrom(III)-Nitrates charakteristische Eigenschaften von Salpertersäurelösungen übernehmen. Außerdem bringt trivalentes Chrom(III) offensichtlich nicht die inhibierende Wirkung mit, die den hexavalenten Chrom(VI)-Verbindungen zugesprochen wird.

Dieser Effekt wird in Figur 8 demonstriert, die den Beizverlust einer Phosphatlösung ohne Chrom und mit Chromnitrat aufzeigt.

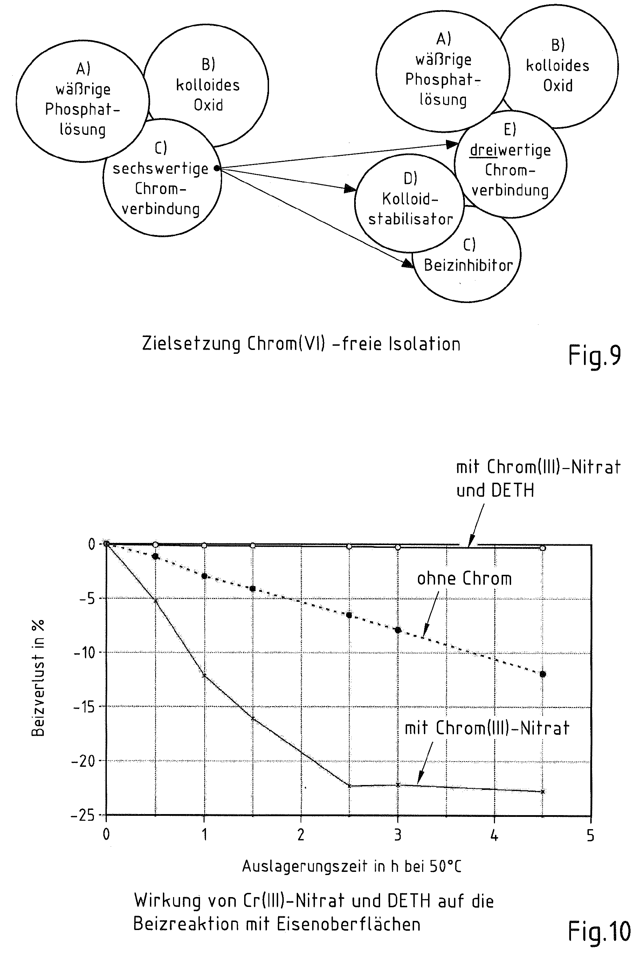

Überraschenderweise wurde gefunden, dass Chrom(III)-Verbindungen in einer Isolationslösung gemäß WO 2009/101129 die vorgenannten Nachteile nicht aufweisen. Grundlage der vorliegenden Erfindung ist also das in Figur 9 schematisierte Prinzip.

Das erfindungsgemäße Verfahren ermöglicht es Chrom(VI)-haltige Phosphatierungslösungen durch Chrom(III)-haltige Phosphatierungen zu ersetzen, welche über die Anwendung von Beizinhibitoren und Kolloidstabilisatoren chemisch so beeinflusst werden, dass sie in der Praxis anwendbar sind und zu hervorragenden Eigenschaften der Fertigisolationsschicht führen.

Vorteilhafterweise sind die im erfindungsgemäßen Verfahren eingesetzten Chrom(III)-Verbindungen in der Phosphatierlösung löslich. Somit eignen sich insbesondere die folgenden Chrom(III)-Salze:
Chrom(III)-Nitrat
Chrom(III)-Chlorid
Chrom(III)-Sulfat
Chrom(III)-Acetat
Chrom(III)-Sulfonat

Besonders geeignet ist das Chrom(III)-Nitrat, da es als Zusatz die höchste auf den Grundwerkstoff übertragene Zugspannung erzeugt und sehr gut in der Phosphatlösung löslich ist.

Die Chrom(III)-Verbindung kann in den verschiedensten Mengen eingesetzt werden. Erfindungsgemäß besonders bevorzugt ist es, wenn die Chrom(III)-Verbindung in einer Menge von 0,2 bis 30 Gew.%, vorzugsweise von 5 bis 20 Gew.%, insbesondere von 8 bis 15 Gew.%, jeweils bezogen auf das Gesamtgewicht der Phosphatlösung, eingesetzt wird. Vorzugsweise erfolgt die Zugabe der Chrom(III)-Verbindung in den vorgenannten Mengenverhältnissen berechnet auf Cr(NO₃)₃*H₂O.

In einer Ausführungsform der Erfindung enthält die Phosphatlösung einen Kolloidstabilisator (A) als Additiv. Hierdurch kann gewährleistet werden, dass der Übergang vom Sol zum Gel erst bei der Trocknung der Phosphatschicht stattfindet. Darüber hinaus ermöglicht der Einsatz von Kolloidstabilisatoren eine homogene Auftragung der Phosphatlösung wodurch homogene Fertigschichtqualitäten erzielt werden können. Die Verwendung von Kolloidstabilisatoren (A) ermöglicht es somit, bei der Phosphatierung von Elektroblech auf den Einsatz von sechswertigem Chrom in der Phosphatlösung zu verzichten, wobei die Probleme, die üblicherweise bei der Chrom-(VI)-freien Fertigung unter Verwendung von Kolloid enthaltenden Phosphatlösungen auftreten, weitestgehend vermieden werden können.

Additive der Gruppe A sind Kolloidstabilisatoren. Kolloidstabilisatoren im Sinne der Erfindung sind Additive, die Kolloide stabilisieren und einen unkontrollierten Sol/Gel-Übergang oder Koagulation des Feststoffs verhindern. Vorteilhafterweise sorgen Kolloidstabilisatoren darüber hinaus für eine Temperaturunempfindlichkeit im Bereich der Anwendung vor dem Auftrag der Phosphatlösung und machen das System unempfindlich gegenüber Fremdsubstanzen, insbesondere Fremdionen.

Erfindungsgemäß können die verschiedensten Kolloidstabilisatoren eingesetzt werden, sofern sie in sauren Lösungen beständig sind. Ferner ist es vorteilhaft, wenn die Kolloidstabilisatoren die Stabilität der kolloiden Lösung nicht stören und die Qualität der aufgebrachten Phosphatschicht nicht nachteilig beeinflussen. Ebenfalls vorteilhaft ist es, wenn die Kolloidstabilisatoren eine möglichst geringe Toxizität aufweisen. Ferner sollte der verwendete Kolloidstabilisator nicht mit den weiteren, gegebenenfalls in der Phosphatlösung vorhandenen Additiven, in einer Weise wechselwirken, dass die Additive in ihrer Einzelwirkung behindert werden.

Die Kolloidstabilisatoren sind Phosphorsäureester. Unter dem Begriff "Phosphorsäureester" werden erfindungsgemäß organische Ester der Phosphorsäure mit der Formel OP(OR)₃ verstanden, die als Kolloidstabilisatoren wirken.

Die Reste R können hierbei unabhängig voneinander Wasserstoff, eine aromatische oder eine aliphatische Gruppe sein, wobei nicht sämtliche Reste R gleichzeitig Wasserstoff sein dürfen. Der Begriff aliphatische Gruppe umfasst Alkyl-, Alkenyl- und Alkinylgruppen.

Alkylgruppen umfassen gesättigte aliphatische Kohlenwasserstoffgruppen, die 1 bis 8 Kohlenstoffatome aufweisen. Eine Alkylgruppe kann geradkettig oder verzweigt sein. Erfindungsgemäß besonders geeignete Alkylgruppen sind Methyl, Ethyl, Propyl, Isopropyl, Butyl, Isobutyl, sec.-Butyl, n-Pentyl, n-Heptyl. Eine Alkylgruppe kann ferner mit einem oder mehreren Substituenten substituiert sein. Geeignete Substituenten sind insbesondere aliphatische Reste. Weitere geeignete Substituenten sind Alkoxygruppen, Nitrogruppen, Sulfoxygruppen, Mercaptogruppen, Sulfonylgruppen, Sulfinylgruppen, Halogen, Sulfamidgruppen, Carbonylaminogruppen, Alkoxycarbonylgruppen, Alkoxyalkylgruppen, Aminocarbonylgruppen, Aminosulfonylgruppen, Aminoalkylgruppen, Cyanoalkylgruppen, Alkylsulfonylgruppen, Sulfonylaminogruppen und Hydroxylgruppen.

Der Ausdruck Alkenyl bezieht sich auf eine aliphatische Kohlenstoffgruppe, die 2 bis 10 Kohlenstoffatome und mindestens eine Doppelbindung aufweist. Eine Alkenylgruppe kann geradkettig oder verzweigt vorliegen. Erfindungsgemäß besonders bevorzugte Alkenylgruppen sind Allyl, 2-Butenyl und 2-Hexinyl. Eine Alkenylgruppe kann gegebenenfalls mit einem oder mehreren Substituenten substituiert sein. Geeignete Substituenten sind die bereits oben als Alkylsubstituenten genannten.

Der Begriff Alkinyl bezieht sich auf eine aliphatische Kohlenstoffgruppe, die 2 bis 8 Kohlenstoffatome und mindestens eine Dreifachbindung aufweist. Eine Alkinylgruppe kann geradkettig oder verzweigt vorliegen. Auch eine Alkinylgruppe kann mit einem oder mehreren Substituenten substituiert vorliegen. Geeignete Substituenten sind die bereits oben als Alkylsubstituenten genannten.

Weitere geeignete Substituenten für die aliphatischen Gruppen sind Arylgruppen, Aralkylgruppen oder cycloaliphatische Gruppen. Aryl bezieht sich auf monocyclische Gruppen wie beispielsweise Phenyl, bicyclische Gruppen wie beispielsweise Indenyl, Naphtalenyl, tricyclische Gruppen wie beispielsweise Fluorenyl oder eine Benzo-verknüpfte Gruppe mit drei Ringen. Auch Aryl kann mit einem oder mehreren Substituenten substituiert vorliegen. Geeignete Substituenten sind die bereits oben für Alkylsubstituenten genannten.

Aralkyl bezieht sich auf eine Alkylgruppe, die mit einer Arylgruppe substituiert vorliegt. Der Ausdruck "cycloaliphatisch" bezeichnet einen gesättigten oder teilweise ungesättigten monocyclischen, bicyclischen oder tricyclischen Kohlenwassserstoffring, der mit einer einzigen Bindung zum Rest des Moleküls verbunden vorliegt. Cycloaliphatische Ringe sind 3 bis 8-gliedrige monocyclische Ringe und 8 bis 12-gliedrige bicyclische Ringe. Eine cycloaliphatische Gruppe umschließt eine Cycloalkylgruppe und Cycloalkenylgruppen. Auch Aralkyl kann mit einem oder mehreren Substituenten substituiert vorliegen. Geeignete Substituenten sind die bereits oben als Alkylsubstituenten genannten.

Weitere geeignete Substituenten für die aliphatischen Gruppen sind die vorgenannten Substituenten, in denen ein oder mehrere Kohlenstoffatome durch Heteroatome substituiert sind.

Besonders geeignet sind Ethylphosphate, insbesondere Monoethylphosphat und/oder Diethylphosphat. Hervorragend eignet sich insbesondere das Produkt ADACID VP 1225/1 der Firma Kebo Chemie.

Das erfindungsgemäße Verfahren ermöglicht somit den Einsatz einer chrom(VI)freien Phosphatlösung. Selbstverständlich kann die Phosphatlösung dennoch Chrom enthalten. Bevorzugt ist jedoch der Einsatz einer Phosphatlösung mit einem Gehalt an sechswertigem Chrom von weniger als 0,2 Gew.%, vorzugsweise von weniger als 0,1 Gew.%, und insbesondere von weniger als 0,01 Gew.%.

Die Phosphatlösung kann ferner einen Beizinhibitor (B), und/oder ein Netzmittel (C) enthalten. Durch den Einsatz von Beizinhibitoren (B) und Netzmitteln (C) können die Eigenschaften, des mit dem erfindungemäßen Verfahren hergestellten kornorientierten Elektrobands noch weiter verbessert werden.

Additive, die der Gruppe B zugehören, sind Beizinhibitoren. Unter dem Begriff "Beizinhibitoren" werden erfindungsgemäß Additive verstanden, die die chemische Wechselwirkung der Phosphatlösung mit der Bandoberfläche so beeinflussen, dass kein oder nur geringe Mengen an Eisen in Lösung gehen. Durch die Verwendung von Beizinhibitoren wird somit eine Kontamination der Phosphatlösung mit Eisenionen verhindert und die Phosphatlösung besitzt über eine lange Zeit konstante Eigenschaften. Diese Vorgehensweise ist deshalb vorteilhaft, weil eine Anreicherung der Phosphatlösung mit Eisen die chemische Beständigkeit der Phosphatschicht auf dem Elektroband verringert. Besonders vorteilhaft erweist sich der Einsatz von Beizinhibitoren in einem kolloiden System, wie es erfindungsgemäß angewendet wird, da der Sol/Gel-Übergang stark von Fremdionen abhängt. Durch Zugabe von Beizinhibitoren kann folglich die Stabilität des kolloiden Systems erheblich verbessert werden.

Erfindungsgemäß können als Beizinhibitor (B) die verschiedensten Additive eingesetzt werden sofern sie in sauren Lösungen beständig sind. Es ist darüber hinaus vorteilhaft, wenn der Beizinhibitor die Qualität der aufgebrachten Phosphatschicht nicht nachteilig beeinflusst. Weiter vorteilhaft ist es, wenn der Beizinhibitor eine möglichst geringe Toxizität aufweist. Grundsätzlich sollten die verwendeten Beizinhibitoren an die eingesetzte Phosphatlösung angepasst werden. Ferner sollten die verwendeten Beizinhibitoren die Stabilität der kolloiden Bestandteile nicht negativ beeinflussen. Darüber hinaus sollte der verwendete Beizinhibitor nicht mit den weiteren Additiven in der Phosphatlösung so wechselwirken, dass die Additive in ihrer Einzelwirkung behindert werden.

Die Beizinhibitoren sind Thioharnstoffderivate, C₂₋₁₀-Alkinole, Triazinderivate, Thioglykolsäure, C₁₋₄-Alkylamine, Hydroxy-C₂₋₈-thiocarbonsäure und/oder Fettalkoholpolyglykolether.

Unter Beizinhibitoren in Form von Thioharnstoffderivaten werden erfindungsgemäß Beizinhibitoren verstanden, die die Thioharnstoffstruktur als Grundgerüst aufweisen. 1 bis 4 Wasserstoffatome des Thioharnstoffs können durch geeignete Substituenten ersetzt werden. Erfindungsgemäß besonders geeignete Substituenten sind aliphatische Gruppen wie sie bereits oben definiert wurden.

Weitere geeignete Substituenten an den Stickstoffatomen des Thioharnstoffgrundgerüsts sind Arylgruppen, Aralkylgruppen oder cycloaliphatische Gruppen wie sie oben definiert wurden.

Ein erfindungsgemäß besonders geeignetes Thioharnstoffderivat ist C₁₋₆-Dialkylthioharnstoff, vorzugsweise C₁₋₄-Dialkylthioharnstoff. Vorzugsweise liegen die Alkylsubstituenten unsubstituiert vor. Ganz besonders bevorzugt ist die Verwendung von Diethylthioharnstoff, insbesondere 1,3-Diethyl-2-thioharnstoff. Ganz besonders geeignet ist das Produkt Ferropas7578 der Firma Alufinish.

Erfindungsgemäß ebenfalls besonders geeignete Beizinhibitoren sind C₂₋₁₀-Alkinole, insbesondere C₂₋₆-Alkindiole, wobei Alkin die vorgenannte Bedeutung hat. In erfindungsgemäß besonders geeigneten C₂₋₆-Alkindiole sind die Alkinsubstituenten unsubstituiert und weisen eine Doppelbindung auf. Erfindungsgemäß noch bevorzugter ist Butin-1,4-diol, insbesondere But-2-in-1,4-diol und Prop-2-in-1-ol.

Erfindungsgemäß ebenfalls sehr gut geeignete Beizinhibitoren sind Triazinderivate. Unter einem Beizinhibitor in Form eines Triazinderivats wird erfindungsgemäß ein Beizinhibitor verstanden, der das Triazingrundgerüst enthält. In den erfindungsgemäß geeigneten Triazinderivaten können ein oder mehrere Wasserstoffatome des Triazingrundgerüsts durch geeignete Substituenten substituiert sein. Geeignete Substituenten sind die bereits oben für Alkylsubstituenten genannten.

Weitere erfindungsgemäß besonders geeignete Beizinhibitoren sind Fettalkoholpolyglykolether. Unter Fettalkoholpolyglykolethern wird erfindungsgemäß das Reaktionsprodukt aus Fettalkoholen mit einem Überschuss an Ethylenoxid verstanden. Erfindungsgemäß besonders geeignete Fettalkohole weisen 6 bis 30, vorzugsweise 8 bis 15 Kohlenstoffatome auf. Der Anteil an Ethylenoxidgruppen in dem Polyglykolether ist vorzugsweise hoch genug, um den Fettalkoholpolyglykolether wasserlöslich zu machen. Demnach sollten vorzugsweise mindestens so viele -O-CH₂-CH₂-Gruppen im Molekül vorliegen wie Kohlenstoffatome im Alkohol. Alternativ kann die Wasserlöslichkeit auch durch geeignete Substitution wie beispielsweise Veresterung mit Schwefelsäure und Überführung des Esters in das Natriumsalz erreicht werden. Grundsätzlich können die Wasserstoffatome in den Fettalkoholpolyglykolethern ebenfalls mit geeigneten Substituenten substituiert werden. Geeignete Substituenten sind die bereits oben für Alkylgruppen genannten Substituenten.

Hervorragend eignen sich ferner Thioglycolsäure, und Hexamethylentetramin zum Einsatz als Beizinhibitor.

Additive der Gruppe C sind Netzmittel. In dem erfindungsgemäßen Verfahren können die verschiedensten Netzmittel eingesetzt werden, sofern sie in sauren Lösungen beständig sind. Ferner ist es vorteilhaft, wenn die Netzmittel die Qualität der aufgebrachten Phosphatschicht nicht nachteilig beeinflussen. Weiter vorteilhaft ist es, wenn die Netzmittel eine möglichst geringe Toxizität aufweisen. Darüber hinaus sollten die verwendeten Netzmittel die Stabilität der kolloiden Bestandteile nicht negativ beeinflussen. Ferner sollte das verwendete Netzmittel nicht mit den weiteren in der Phosphatlösung vorhandenen Additiven in einer Weise wechselwirken, dass die Additive in ihrer Einzelwirkung behindert werden.

Der Einsatz von Netzmitteln in dem erfindungsgemäßen Verfahren führt dazu, dass die Auftragung der Phosphatlösung auf die Bandoberfläche verbessert wird. Darüber hinaus steigt die Homogenität der Phosphatschicht. Praktische Versuche haben gezeigt, dass sich Fluortenside als Netzmittel hervorragend eignen. Ein Vorteil von Fluortensiden besteht darin, dass sie in den verschiedensten Phosphatlösungen, sogar in Cr(VI)-haltigen Phosphatlösungen, stabil anwendbar sind. Für das erfindungsgemäße Verfahren eignen sich die verschiedensten Fluortenside als Additiv. Unter dem Begriff Fluortensid wird erfindungsgemäß ein Tensid verstanden, das als hydrophobe Gruppe einen Perfluoralkyl-Rest aufweist, wobei Alkyl die oben definierte Bedeutung hat. Fluortenside zeichnen sich gegenüber nicht-fluorierten Tensiden dadurch aus, dass sie bereits in äußerst geringen Konzentrationen eine deutliche Verringerung der Oberflächenspannung des Wassers bewirken. Darüber hinaus besitzen Fluortenside eine hohe chemische und thermische Stabilität. Als Tensidkomponente des erfindungsgemäß bevorzugt einsetzbaren Fluortensids kommen die verschiedensten Tenside in Frage sofern sie in sauren Lösungen beständig sind. Ferner ist es vorteilhaft, wenn die Fluortenside die Stabilität der kolloiden Lösung nicht stören und die Qualität der aufgebrachten Phosphatschicht nicht nachteilig beeinflussen. Weiter vorteilhaft ist es, wenn die Fluortenside eine möglichst geringe Toxizität aufweisen.

Praktische Versuche haben gezeigt, dass C₁₋₄-Tetraalkylammoniumperfluor-C₅₋₁₀-Alkylsulfonate erfindungsgemäß besonders geeignete Fluortenside sind. Ein besonders geeignetes Netzmittel ist das Produkt NC 709 der Firma Schwenk, das Tetraethylammoniumperfluoroktansulfonat enthält. Die Mengen, in denen die verschiedenen Additive A bis C in der Phosphatlösung enthalten sind, können in einem weiten Rahmen variiert werden. Praktische Versuche haben gezeigt, dass besonders gute Ergebnisse erzielt werden,
wenn der Kolloidstabilisator (A) in einer Menge von 0,001 bis 20 Gew.%, vorzugsweise in einer Menge von 0,01 bis 10 Gew.% und insbesondere in einer Menge von 0, 1 bis 2 Gew.% eingesetzt wird. Der Beizinhibitor (B) wird zweckmäßigerweise in einer Menge von 0,001 bis 10 Gew.%, vorzugsweise in einer Menge von 0,005 bis 1 Gew.% und insbesondere in einer Menge von 0,01 bis 0,08 Gew.% eingesetzt. Das Netzmittel (C) wird zweckmäßigerweise in einer Menge von 0,0001 bis 5 Gew.%, vorzugsweise in einer Menge von 0,001 bis 1 Gew.% und insbesondere in einer Menge von 0,01 bis 0,1 Gew.% eingesetzt, jeweils bezogen auf das Gesamtgewicht der Phosphatlösung.

Die erfindungsgemäße Phosphatlösung kann die verschiedensten Phosphate enthalten. So kann die Phosphatlösung beispielsweise Calcium-, Magnesium-, Manganphosphat und/oder Gemische hiervon enthalten. Aufgrund ihrer guten Wasserlöslichkeit sind primäre Phosphate (Monophosphate) erfindungsgemäß besonders bevorzugt. Besonders gute Ergebnisse werden mit einer Phosphatlösung erzielt, die Aluminium- und/oder Magnesiumphosphat enthält. Ganz besonders bevorzugt sind Phosphatlösungen, die Al(H₂PO₄)₃, insbesondere in einer Menge von 40 bis 60 Gew.%, enthalten.

Wird eine Phosphatlösung eingesetzt, die Al(H₂PO₄)₃ als Phosphat und SiO₂ (Kieselsol) als kolloide Komponente enthält, so hat sich folgendes Mengenverhältnis als besonders geeignet erwiesen:
0,5 < Al(H₂PO₄)₃: SiO₂ < 20, vorzugsweise
0,7 < Al(H₂PO₄)₃: SiO₂ < 5 und insbesondere
Al(H₂PO₄)₃: SiO₂ = 1,36.

Basis für die Phosphatlösung ist vorzugsweise Wasser; es können jedoch selbstverständlich auch andere Lösungsmittel eingesetzt werden, sofern sie eine ähnliche Reaktivität und Polarität wie Wasser aufweisen.

Erfindungsgemäß bevorzugt beträgt die Konzentration des Phosphats in der Phosphatlösung 5 bis 90 Gew.%, vorzugsweise 20 bis 80 Gew.%, noch bevorzugter 30 bis 70 Gew.% und insbesondere 40 bis 60 Gew.%.

In der Praxis hat sich eine Einbrennphosphatierung im Rahmen der Entspannungsglühung als besonders geeignet zur Ausbildung der Phosphatschicht auf dem Elektroband erwiesen. In der Einbrennphosphatierung wird zunächst die Phosphatlösung auf das Band aufgetragen und anschließend bei Temperaturen von über 700°C, vorzugsweise von mehr als 800°C, insbesondere von etwa 850°C, eingebrannt. Besonders bewährt hat sich das Einbrennen in einem Durchlaufofen.

Wie bereits oben erläutert, enthält die Phosphatlösung eine kolloide Komponente. Diese Ausführungsform ist vorteilhaft, da mit der kolloiden Komponente bei der Trocknung der Phosphatschicht eine Zugspannung auf das Elektroband übertragen werden kann. Die Zugspannung führt zu einer deutlichen Verringerung der Ummagnetisierungsverluste bei Einsatz des Elektrobands. Darüber hinaus kann die Magnetostriktion und somit das Auftreten von Geräuschentwicklung beim Einsatz in Transformatoren minimiert werden.

Eine erfindungsgemäß besonders geeignete kolloide Komponente ist kolloides Siliziumdioxid. Im Hinblick auf die Stabilität des kolloiden Systems ist neben der Verwendung eines Kolloidstabilisators der pH-Wert der Phosphatlösung wichtig. Um die Stabilität der Phosphatlösung vor der Trocknung zu erhöhen, haben sich pH-Werte von < 3, vorzugsweise von 0,5 bis 1, besonders bewährt.

Eine weitere Erhöhung der Zugspannung auf das Elektroband kann dadurch bewirkt werden, dass zwischen Phosphatschicht und Elektroband ein Glasfilm aufgebracht wird. Unter Glasfilm wird erfindungsgemäß eine Keramik ähnliche Schicht verstanden, welche vorzugsweise überwiegend Mg₂SiO₄ sowie eingelagerte Sulfide enthält. Der Glasfilm wird vorzugsweise in an sich bekannter Weise während der Hochglühung aus Magnesiumoxid und Siliciumoxid gebildet.

Die Phosphatschicht und der gegebenenfalls vorhandene Glasfilm kann an Ober- und/oder Unterseite des Elektrobands angeordnet sein. Vorzugsweise sind Phosphatschicht und Glasfilm an Ober- und Unterseite des Elektrobands angeordnet.

Das erfindungsgemäße kornorientierte Elektroband eignet sich für die verschiedensten Anwendungen. Eine besonders hervorzuhebende Verwendung des erfindungsgemäßen kornorientierten Elektrobands ist der Einsatz als Kernwerkstoff in einem Transformator.

Nachfolgend wird die Erfindung anhand von mehreren Ausführungsbeispielen näher erläutert.

### Beispiel 1: Wirkung von Chromnitrat in der Phosphatlösung auf die chemische Wechselwirkung

Folgende Phosphatlösungen wurden vorbereitet.

**Tabelle 4**

| Lösungskomponente | | **ohne Chrom** | **mit Chrom(III)-Nitrat** | **mit Chrom(III)-Nitrat und DETH** |
|---|---|---|---|---|
| Monoaluminiumphosphatlösung 50% | g | 90 | 90 | 90 |
| Kieselsol 30% | g | 110 | 110 | 110 |
| Diethylthioharnstoff | g | | | 0,06 |
| Chrom(III)-Nitrat | g | | 24 | 24 |

Phosphat/Kieselsol-Gemische ohne Cr(VI) und ohne Beizinhibitor gemäß WO 2009/101129 zeigen eine deutlich ausgeprägte Wechselwirkung mit freien Eisenoberflächen. Durch den Zusatz von Chrom(III)-Nitrat wird eine nochmals deutlich verstärkte Wechselwirkung erzeugt. Die Kombination der Zusätze Chrom(III)-Nitrat und Diethylthioharnstoff (DETH) führt zu einer eindeutigen Inhibition der chemischen Wechselwirkung.

Die Inhibition der chemischen Wechselwirkung erlaubt einen Einsatz in industriellen Beschichtungsanlagen, da die Kontamination der Phosphatierlösung mit Eisenionen verhindert wird.

Figur 10 illustriert die Wirkung von Cr(III)-Nitrat und DETH auf die Beizreaktion mit Eisenoberflächen.

### Beispiel 2: Wirkung von Chromnitrat in der erfindungsgemäßen Isolationslösung auf die Kolloidstabilität

Zur Verdeutlichung der Vorteile gemäß vorliegender Erfindung wurden folgende Phosphatlösungen vorbereitet.

**Tabelle 5**

| Lösungskomponente | **Lösungen** | | | | | |
|---|---|---|---|---|---|---|
| | | **1** | **2** | **3** | **4** | **5** |
| Monoaluminiumphosphatlösung 50% | g | 150 | 150 | 150 | 150 | 150 |
| Kieselsol 30% | g | 183 | 183 | 183 | 183 | 183 |
| Wasser | g | 22,5 | 10 | 12,5 | | 22,5 |
| Chromtrioxid | g | | | | | 7,7 |
| Diethylthioharnstoff | g | | 0,1 | | 0,1 | |
| Ethylphosphat | g | | 12,5 | | 12,5 | |
| Chrom(III)-Nitrat | g | | | 40 | 40 | |

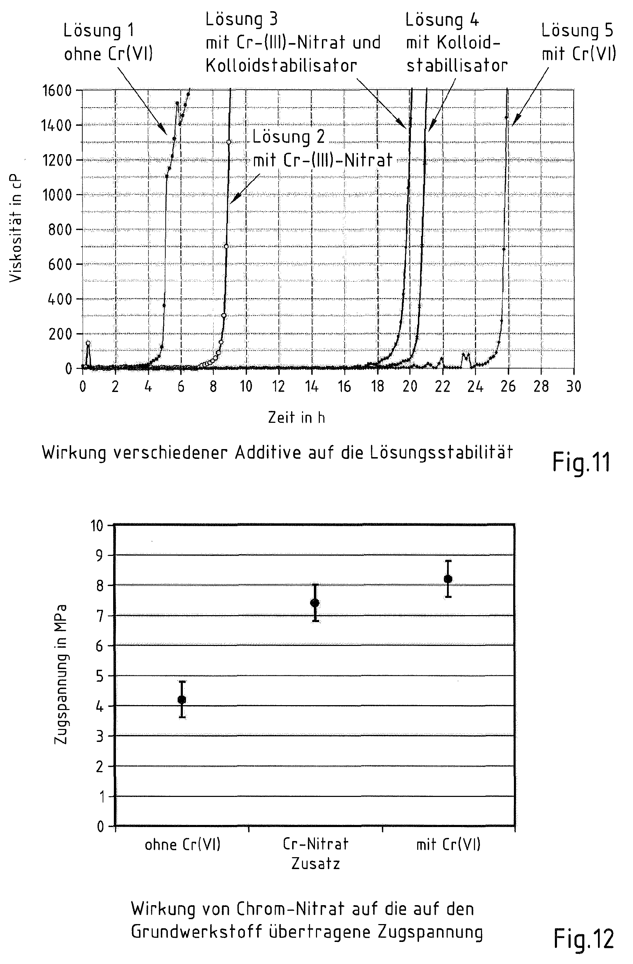

Die Isolationslösungen wurden einer Messung der zeitlichen Entwicklung der Viskosität bei 50°C unterzogen. Figur 11 zeigt die Ergebnisse.

Die Isolationslösung mit Chrom(VI) zeigt eine sehr gute Lösungsstabilität. Das ersatzlose Weglassen der Chrom(VI)-Verbindung (Lösung 1) führt zu einer drastischen Verschlechterung der Lösungsstabilität, was einen Einsatz in industriellen Fertigungsprozessen unmöglich macht. Der Austausch von Chrom(VI) durch Chrom(III) führt ebenfalls zu einer Verschlechterung der Lösungsstabilität. Derartige Lösungen sind ebenso wenig für die Praxis geeignet wie die Lösung 1. Wendet man jedoch Chrom(III) in einer Lösung an, die einen Kolloidstabilisator (A) beinhaltet, so bleibt die Lösungsstabilität erhalten. Derartige Lösungen sind für industrielle Fertigungsprozesse geeignet.

### Beispiel 3: Wirkung von Chromnitrat in der Phosphatlösung auf die Zugspannung

Durch die eingebrannte Isolationsschicht soll eine Zugspannung auf den ferromagnetischen Grundwerkstoff übertragen werden, die die Domänenstruktur positiv beeinflussen soll und darüber den Ummagnetisierungsverlust absenkt.

Zur Demonstration der Vorteile der erfindungsgemäßen Isolationslösung wurden folgende Lösungen vorbereitet.

**Tabelle 6**

| Lösungskomponente | **Lösungen** | | | |
|---|---|---|---|---|
| | | **1** | **2** | **3** |
| Monoaluminiumphosphatlösung 50% | g | 150 | 150 | 150 |
| Kieselsol 30% | g | 183 | 183 | 183 |
| Wasser | g | 40 | 40 | 14 |
| Diethylthioharnstoff | g | 0,1 | 0,1 | |
| Ethylphosphat | g | 12,5 | 12,5 | |
| Chrom(III)-Nitrat | g | | 40 | |
| Chrom(Vl)-Oxid | g | | | 14 |

Die Lösungen wurden auf ko-Elektrobandproben der Größe 305 mm * 60 mm aufgetragen und bei 850°C 2 min eingebrannt. Die Schichtauftragung im eingebrannten Zustand betrug in allen Fällen 3,5 g/m². Anschließend wurde der Zugspannungstest durchgeführt. Figur 12 fasst die Ergebnisse zusammen.

### Beispiel 4: Einfluss von Chrom(III)-Nitrat in der Phosphatlösung auf die Schichtoptik

Folgende Phosphatlösungen wurden vorbereitet.

**Tabelle 7**

| Lösungskomponente | | **erfindungsgemäß** | WO 2009/101129 |
|---|---|---|---|
| | | **1** | **2** |
| Monoaluminiumphosphatlösung 50% | g | 150 | 150 |
| Kieselsol 30% | g | 183 | 183 |
| Wasser | g | 40 | 40 |
| Diethylthioharnstoff | g | 0,1 | 0,1 |
| Ethylphosphat | g | 12,5 | 12,5 |
| Chrom(lll)-Nitrat | | 40 | |

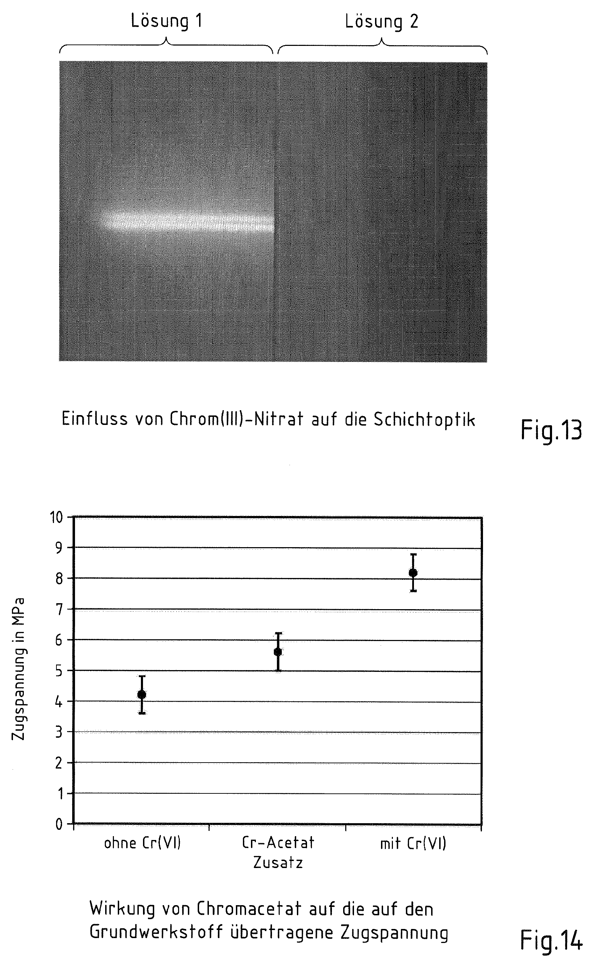

Die Lösungen wurden auf ko-Elektrobandproben mit Glasfilm aufgetragen und ca. 2 min. bei 850°C eingebrannt. Anschließend wurde die Schichtoptik bewertet (vgl. Fig.13).

Die Schichtoptik der erfindungsgemäßen Isolation zeigt deutlich mehr Glanz als die gemäß WO 2009/101129. Die Schichtoptik der erfindungsgemäßen Isolation lässt sich von einer Isolation, die unter Verwendung von hexavalentem Chrom(VI) erzeugt wurde, nicht mehr unterscheiden.

### Beispiel 5: Wirkung von Chromacetat in der Phosphatlösung auf die Zugspannung

Durch die eingebrannte Isolationsschicht soll eine Zugspannung auf den ferromagnetischen Grundwerkstoff übertragen werden, die die Domänenstruktur positiv beeinflussen soll und darüber den Ummagnetisierungsverlust absenkt.

Zur Demonstration der Vorteile der im erfindungsgemäßen Verfahren eingesetzten Phosphatlösung wurden folgende Lösungen vorbereitet.

**Tabelle 8**

| Lösungskomponente | **Lösungen** | | | |
|---|---|---|---|---|
| | | **1** | **2** | **3** |
| Monoaluminiumphosphatlösung 50% | g | 150 | 150 | 150 |
| Kieselsol 30% | g | 183 | 183 | 183 |
| Wasser | g | 40 | 40 | 14 |
| Diethylthioharnstoff | g | 0,1 | 0,1 | |
| Ethylphosphat | g | 12,5 | 12,5 | |
| ChromdlO-Acetat | g | | 15 | |
| Chrom(VI)-Oxid | g | | | 14 |

Die Lösungen wurden auf ko-Elektrobandproben der Größe 305 mm * 60 mm aufgetragen und bei 850°C 2 min eingebrannt. Die Schichtauftragung im eingebrannten Zustand betrug in allen Fällen 3,5 g/m². Anschließend wurde der Zugspannungstest durchgeführt. Figur 14 fasst die Ergebnisse zusammen.

Durch Chrom(III)-Acetat wird die auf den Grundwerkstoff übertragene Zugspannung gegenüber der Chrom-freien Isolation positiv beeinflusst, jedoch ist die Wirkung deutlich weniger stark ausgeprägt als die des Chrom(VI).

### Beispiel 6 : Wirkung von Chromchlorid in der erfindungsgemäßen Isolationslösung auf die Zugspannung

Zur Demonstration der Vorteile der im erfindungsgemäßen Verfahren eingesetzten Phosphatlösung wurden folgende Lösungen vorbereitet.

**Tabelle 9**

| Lösungskomponente | | **Referenz 1** | **erfindungsgemäß 2** |
|---|---|---|---|
| Monoaluminiumphosphatlösung 50% | g | 150 | 150 |
| Kieselsol 30% | g | 183 | 183 |
| Wasser | g | 40 | 40 |
| Diethylthioharnstoff | g | 0,1 | 0,1 |
| Ethylphosphat | g | 12,5 | 12,5 |
| Chrom(III)-Chlond | g | | 80 |

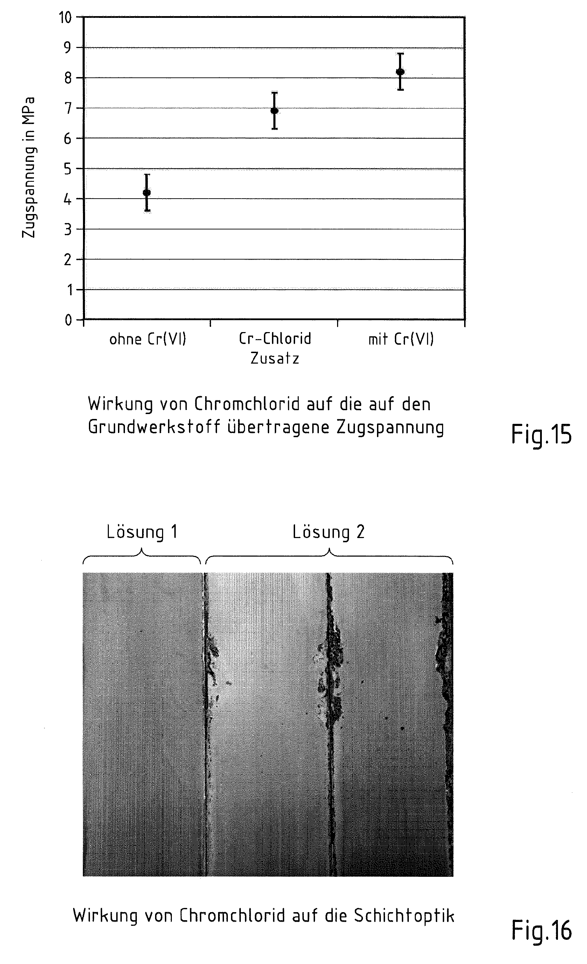

Die Lösungen wurden auf ko-Elektrobandproben der Größe 305 mm * 60 mm aufgetragen und bei 850°C 2 min eingebrannt. Die Schichtauftragung im eingebrannten Zustand betrug in allen Fällen 3,5 g/m². Anschließend wurde der Zugspannungstest durchgeführt. Figur 15 fasst die Ergebnisse zusammen.

Von Chrom(III)-Chlorid geht offensichtlich die gleiche Wirkung auf die Schichtoptik aus, wie von Chrom(III)-Nitrat und hexavalentem Chrom(VI) (vgl. Fig. 16). Allerdings treten bei Verwendung von Chrom(III)-Chlorid erhebliche Schichtdefekte auf, die wahrscheinlich auf den Säurerest des betreffenden Salzes zurückzuführen sind. Chrom(III)-Chlorid kann zur Zielerreichung also eingesetzt werden. Vorteilhafterweise wird das Gesamtlösungssystem dann speziell darauf konfektioniert (Art der Beizinhibition etc.).

### Beispiel 7: Wirkung von Chrom(III)-Sulfonat in der Phosphatlösung auf die Zugspannung

Zur Demonstration der Vorteile der im erfindungsgemäßen Verfahren eingesetzten Phosphatlösung wurden folgende Lösungen vorbereitet.

| Lösungskomponente | | **Referenz 1** | **erfindungsgemäß 2** |
|---|---|---|---|
| Monoaluminiumphosphatlösung 50% | g | 150 | 150 |
| Kieselsol 30% | g | 183 | 183 |
| Wasser | g | 40 | 40 |
| Diethylthioharnstoff | g | 0,1 | 0,1 |
| Ethylphosphat | g | 12,5 | 12,5 |
| Chrom(III)-Sulfonat | g | | 50 |

| | | | |
|---|---|---|---|
| Tabelle 10 | | | |

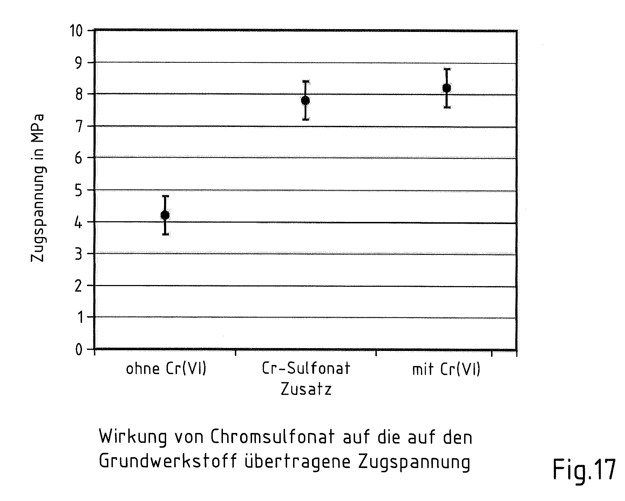

Die Lösungen wurden auf ko-Elektrobandproben der Größe 305 mm * 60 mm aufgetragen und bei 850°C 2 min eingebrannt. Die Schichtauftragung im eingebrannten Zustand betrug in allen Fällen 3,5 g/m². Anschließend wurde der Zugspannungstest durchgeführt. Figur 17 fasst die Ergebnisse zusammen.

## Patentansprüche

1. Verfahren zur Herstellung eines mit einer Phosphatschicht belegten kornorientierten Elektrobands, in dem auf das Elektroband eine Phosphatlösung mit einem Gehalt an sechswertigem Chrom von weniger als 0,2 Gew.% aufgebracht wird, die eine kolloide Komponente, sowie mindestens einen Phosphorsäureester als Kolloidstabilisator (A), und/oder mindestens einen Beizinhibitor (B), ausgewählt aus Thioharnstoffderivat, C₂₋₁₀-Alkinol, Triazinderivat, Thioglykolsäure, C₁₋₄-Alkylamin, Hydroxy-C₂₋₈-thiocarbonsäure und/oder Fettalkoholpolyglykolether, insbesondere Diethylthioharnstoff, Prop-2-in-1-ol, Butin-1,4-diol, Thioglycolsäure, und/oder Hexamethylentetramin enthält, **dadurch gekennzeichnet, dass** die Phosphatlösung mindestens eine Verbindung, die Chrom in der Oxidationsstufe III aufweist (Chrom(III)-Verbindung), enthält.

2. Verfahren nach Anspruch 1, **dadurch**
**gekennzeichnet, dass** als Chrom(III)-Verbindung ein Chrom(III)-Salz eingesetzt wird.

3. Verfahren nach Anspruch 2, **dadurch**
**gekennzeichnet, dass**
als Chrom(III)-Salz Chrom(III)-Nitrat, Chrom(III)-Chlorid, Chrom(III)-Sulfat, Chrom(III)-Acetat und/oder Chrom(III)-Sulfonat eingesetzt wird.

4. Verfahren nach einem der vorangehenden Ansprüche,
**dadurch gekennzeichnet, dass** die Chrom(III)-Verbindung in einer Menge von 0,2 bis 30 Gew.%, vorzugsweise von 5 bis 20 Gew.%, insbesondere von 8 bis 15 Gew.%, bezogen auf das Gesamtgewicht der Phosphatlösung, eingesetzt wird.

5. Verfahren nach einem der vorangehenden Ansprüche,
**dadurch gekennzeichnet, das**s eine Phosphatlösung mit einem Gehalt an sechswertigem Chrom von weniger als 0,1 Gew.%, eingesetzt wird.

6. Verfahren nach einem der vorangehenden Ansprüche,
**dadurch gekennzeichnet,**
**dass** als Kolloidstabilisator (A) Monoethylphosphat und/oder Diethylphosphat, eingesetzt wird.

7. Verfahren nach einem der vorangehenden Ansprüche
**dadurch gekennzeichnet,**
**dass** die Phosphatlösung ein Netzmittel (C), vorzugsweise ein Fluortensid, insbesondere Tetraethylammoniumperfluorolctansulfonat, enthält.

8. Verfahren nach einem der vorangehenden Ansprüche,
**dadurch gekennzeichnet,**
**dass** der Kolloidstabilisator (A) in einer Menge von 0,001 bis 20 Gew.%, der Beizinhibitor (B) in einer Menge von 0,001 bis 10 Gew.% und/oder das Netzmittel (C) in einer Menge von 0,0001 bis 5 Gew.%, jeweils bezogen auf das Gesamtgewicht der Phosphatlösung, eingesetzt wird.

9. Verfahren nach einem der vorangehenden Ansprüche,
**dadurch gekennzeichnet, dass** eineAluminium-und/oder Magnesiumphosphat enthaltende Phosphatlösung auf das Elektroband aufgebracht wird.

10. Verfahren nach einem der vorangehenden Ansprüche,
**dadurch gekennzeichnet,**
**dass** eine Phosphatlösung mit einem pH-Wert von < 3, vorzugsweise zwischen 1 und 2, auf das Elektroband aufgebracht wird.

11. Verfahren nach einem der vorangehenden Ansprüche,
**dadurch gekennzeichnet,**
**dass** das mit der Phosphatlösung versehene Elektroband bei einer Temperatur von mehr als 800°C gebrannt wird.

12. Kornorientiertes Elektroband belegt mit einer Phosphatschicht, **dadurch g e k enn-zeichnet, dass** es mit einem Verfahren nach einem der Ansprüche 1 bis 11 hergestellt ist.

13. Verwendung eines kornorientierten Elektrobands nach Anspruch 12 als Kernwerkstoff in einem Transformator.

## Claims

1. Method for producing a grain-oriented electrical steel which is coated with a phosphate layer, in which a phosphate solution having a hexavalent chromium content of less than 0.2 wt.% is applied to the electrical steel, which solution contains a colloid component, at least one phosphoric ester as a colloid stabiliser (A), and/or at least one pickling inhibitor (B) selected from thiourea derivative, C₂₋₁₀-alkynol, triazine derivative, thioglycolic acid, C₁₋₄-alkylamine, hydroxy-C₂₋₈-thiocarboxylic acid and/or fatty alcohol polyglycol ether, in particular diethylthiourea, prop-2-in-1-ol, butin-1,4-diol, thioglycolic acid and/or hexamethylenetetramine, **characterised in that** the phosphate solution contains at least one compound comprising chromium in oxidation state III (chromium(III) compound).

2. Method according to claim 1, **characterised in that** a chromium(III) salt is used as the chromium(III) compound.

3. Method according to claim 2, **characterised in that** chromium(III) nitrate, chromium(III) chloride, chromium(III) sulfate, chromium(III) acetate and/or chromium(III) sulfonate is used as the chromium(III) salt.

4. Method according to any of the preceding claims, **characterised in that** the chromium(III) compound is used in an amount of from 0.2 to 30 wt.%, preferably of from 5 to 20 wt.%, in particular of from 8 to 15 wt.%, based on the overall weight of the phosphate solution.

5. Method according to any of the preceding claims, **characterised in that** a phosphate solution is used that has a hexavalent chromium content of less than 0.1 wt.%.

6. Method according to any of the preceding claims, **characterised in that** monoethyl phosphate and/or diethyl phosphate is/are used as the colloid stabiliser (A).

7. Method according to any of the preceding claims, **characterised in that** the phosphate solution contains a wetting agent (C), preferably a fluorosurfactant, in particular tetraethylammonium perfluorooctanesulfonate.

8. Method according to any of the preceding claims, **characterised in that** the colloid stabiliser (A) is used in an amount of from 0.001 to 20 wt.%, the pickling inhibitor (B) is used in an amount of from 0.001 to 10 wt.% and/or the wetting agent (C) is used in an amount of from 0.0001 to 5 wt.%, in each case based on the overall weight of the phosphate solution.

9. Method according to any of the preceding claims, **characterised in that** a phosphate solution containing aluminium phosphate and/or magnesium phosphate is applied to the electrical steel.

10. Method according to any of the preceding claims, **characterised in that** a phosphate solution having a pH of < 3, preferably of between 1 and 2, is applied to the electrical steel.

11. Method according to any of the preceding claims, **characterised in that** the electrical steel provided with the phosphate solution is burned at a temperature of more than 800 °C.

12. Grain-oriented electrical steel coated with a phosphate layer, **characterised in that** said electrical steel is produced using a method according to any of claims 1 to 11.

13. Use of a grain-oriented electrical steel according to claim 12 as a core material in a transformer.

## Revendications

1. Procédé de fabrication d'une bande électrique à grains orientés revêtue d'une couche de phosphate, dans lequel on applique sur ladite bande électrique une solution de phosphate, qui présente une teneur en chrome hexavalent de moins de 0,2 % en poids et qui contient un composant colloïde, ainsi qu'au moins de l'ester d'acide phosphorique en tant que stabilisateur colloïde (A) et / ou au moins un inhibiteur de décapage (B) qui est choisi dans le groupe contenant la thio-urée, le C₂₋₁₀-alcinol, le dérivé de triazine, l'acide thioglycolique, la C₁₋₄-amine alkylique, l'hydroxy-C₂₋₈ - acide thiocarbonique et / ou l'éther polyglycolique d'alcool gras, en particulier la diéthylthio-urée, prop-2-en-1-ol, le butin-1,4-diol, l'acide thioglycolique et / ou l'héxaméthylène tétramine,
**caractérisé en ce que** la solution de phosphate comprend au moins un composé qui contient du chrome en phase d'oxydation III (composé de chrome (III).

2. Procédé selon la revendication 1,
**caractérisé en ce que** l'on utilise un sel de chrome (III) come composé du chrome (III)

3. Procédé selon la revendication 2,
**caractérisé en ce que** l'on utilise, comme sel de chrome (III), du nitrate de chrome (III), du chlorure de chrome (III), du sulfate de chrome (III), de l'acétate de chrome (III) et / ou du sulfonate de chrome (III).

4. Procédé selon l'une des revendications précédentes,
**caractérisé en ce que** le composé du chrome (III) est utilisé en quantité de 0,2 à 30 % en poids, de préférence de 5 à 20 % en poids, en particulier de 8 à 15 % en poids par rapport au poids total de la solution de phosphate.

5. Procédé selon l'une des revendications précédentes,
**caractérisé en ce que** l'on utilise une solution de phosphate qui présente une teneur de chrome héxavalent qui est inférieure à 0,1 % en poids.

6. Procédé selon l'une des revendications précédentes,
**caractérisé en ce que** l'on utilise, comme stabilisateur colloïde (A), du monoéthylphosphate et / ou du diéthylphosphate.

7. Procédé selon l'une des revendications précédentes,
**caractérisé en ce que** la solution de phosphate contient un agent de mouillage (C), qui est de préférence un tensioactif fluoré, en particulier du sulfonate de fluor octane d'ammonium tétra éthylique.

8. Procédé selon l'une des revendications précédentes,
**caractérisé en ce que** l'on utilise le stabilisateur colloïde (A) en quantité de 0,001 à 20 % en poids, l'inhibiteur de décapage (B) en quantité de 0,001 à 10 % en poids et / ou l'agent de mouillage (C) en quantité de 0,0001 à 5 % en poids, chacun par rapport au poids total de la solution de phosphate.

9. Procédé selon l'une des revendications précédentes,
**caractérisé en ce que** l'on applique sur la bande électrique une solution de phosphate qui contient un phosphate d'aluminium et / ou un phosphate de magnésium.

10. Procédé selon l'une des revendications précédentes,
**caractérisé en ce que** l'on applique sur la bande électrique une solution de phosphate, dont le pH est < 3, de préférence situé entre 1 et 2.

11. Procédé selon l'une des revendications précédentes,
**caractérisé en ce que** le bande électrique, pourvue d'une solution de phosphate, est cuite à une température de plus de 800 °C.

12. Bande électrique à grains orientés, revêtue d'une couche de phosphate
**caractérisér en ce que** celle-ci est fabriquée par un procédé selon l'une des revendications 1 à 11.

13. Utilisation d'une bande électrique à grains orientés selon la revendication 12 en tant que matériau d'âme dans un transformateur.
